# EUROPEAN PATENT SPECIFICATION

(11) **EP 4 120 422 B1**
(45) Date of publication and mention of the grant of the patent: **04.06.2025**
(21) Application number: 21898519.0
(22) Date of filing: 22.11.2021
(51) Int. Cl.: H01M 10/0569, H01M 10/052, H01M 4/38

(54) **ELECTROLYTE FOR LITHIUM-SULFUR BATTERY AND LITHIUM-SULFUR BATTERY COMPRISING SAME**
ELEKTROLYT FÜR LITHIUM-SCHWEFEL-BATTERIE UND LITHIUM-SCHWEFEL-BATTERIE DAMIT
ÉLECTROLYTE POUR BATTERIE AU LITHIUM-SOUFRE ET BATTERIE AU LITHIUM-SOUFRE LE COMPRENANT

(30) Priority: 26.11.2020 KR 20200161255
(43) Date of publication of application: 18.01.2023
(73) Proprietor: LG Energy Solution, Ltd., Seoul 07335 (KR)
(72) Inventor: SONG, Myeongjun, Daejeon 34122 (KR); LEE, Changhoon, Daejeon 34122 (KR); PARK, Seonghyo, Daejeon 34122 (KR)
(74) Representative: Goddar, Heinz J.
(86) International application number: PCT/KR2021/017140
(87) International publication number: WO 2022/114693

(56) References cited:
- EP-A1- 3 429 020
- EP-A1- 4 044 317
- WO-A1-2018/004103
- WO-A1-2018/004110
- CN-B- 106 887 640
- JP-A- 2007 518 229
- KR-A- 20180 001 997
- KR-A- 20180 066 169
- KR-A- 20190 127 895
- KR-A- 20200 102 613
- US-A1- 2018 277 913
- US-B2- 10 270 090

## Description

### [Technical Field]

The present invention relates to an electrolyte solution for a lithium-sulfur battery and a lithium-sulfur battery comprising the same.

### [Background Art]

As the application range of secondary batteries is expanded from small portable electronic devices to medium and large-sized electric vehicles (EV), energy storage systems (ESS), electric ships, etc., the demand for lithium secondary batteries with high capacity, high energy density and long lifetime is rapidly increasing.

Among them, the lithium-sulfur secondary battery means a battery system using a sulfur-based material having a sulfur-sulfur bond (S-S bond) as a positive electrode active material and using lithium metal as a negative electrode active material. Sulfur, which is the main material of the positive electrode active material, has properties in that it has a low atomic weight, is very rich in resources and thus easy to supply and receive, and also is cheap, thereby lowering the manufacturing cost of the battery, and is nontoxic and thus environmentally friendly.

In particular, the lithium-sulfur secondary battery has a theoretical discharging capacity of 1,675 mAh/g-sulfur, and can theoretically realize a high energy storage density of 2,600Wh/kg compared to its weight. Therefore, since the lithium-sulfur battery has a very high value compared to the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and a lithium-ion battery (250 Wh/kg) currently being studied, it is receiving great attention in the market of medium and large-sized secondary batteries that are being developed so far.

In the case of the lithium-sulfur secondary battery, when discharging it, an oxidation reaction, where lithium donates electrons and becomes a lithium cation, occurs at the negative electrode, and a reduction reaction, where a sulfur-based material accepts electrons to form a sulfur anion, occurs at the positive electrode. Through the oxidation-reduction reaction, the sulfur is converted from the cyclic S₈ structure before discharging to the linear lithium polysulfide (Li₂Sₓ, x = 8, 6, 4, 2) and eventually, when the lithium polysulfide is completely reduced, lithium sulfide (Li₂S) is finally produced.

In particular, lithium polysulfide (Li₂Sₓ, x > 4) with a high oxidation number of sulfur dissolves easily in the organic electrolyte solution, and thus gradually diffuses away from the positive electrode, from which it is generated, due to the concentration difference. As a result, as the lithium polysulfide leached from the positive electrode is gradually lost out of the reaction area of the positive electrode, the amount of sulfur material participating in the electrochemical reaction at the positive electrode is reduced, thereby resulting in a decrease in the charging capacity of the lithium-sulfur secondary battery.

In addition, there is a problem that the leaching of the lithium polysulfide increases the viscosity of the electrolyte solution and reduces the ion conductivity, and the lithium polysulfide directly reacts with the lithium metal negative electrode through continuous charging/discharging reaction, and thus lithium sulfide (Li₂S) adheres to the surface of the lithium metal, thereby lowering the reaction activity and deteriorating the potential characteristic.

In addition, there was an attempt to build a lithium-sulfur battery system with a catholyte-based electrolyte system to improve the reactivity of the existing lithium-sulfur battery. However, this attempt was also confirmed to have a problem that the lithium polysulfide as an intermediate product was leached into the electrolyte thereby deteriorating the stability of the cell.

In order to solve these problems, there have been studies on the sparingly solvating electrolyte (SSE)-based electrolyte system, which can lower the solubility of the lithium polysulfide in the electrolyte, in the relevant technical field. However, the SSE electrolyte system, which is based on a high concentration of salt, was able to operate the battery normally only under high temperature conditions of 45°C or higher due to its high viscosity property. Accordingly, studies on the SSE electrolyte system, which can operate the battery normally even at a low temperature, are being continuously conducted.

### [Prior Art Document]

### [Non-Patent Document]

(Non-Patent Document 1) Lei Cheng et al., Sparingly Solvating Electrolytes for High Energy Density Lithium-Sulfur Batteries, ACS Energy Lett. 2016, 1, 503-509.

EP 3 429 020 A1 discloses an electrolyte solution for a lithium-sulfur battery comprising a lithium salt and an organic solvent, wherein the organic solvent comprises tetrahydrofuran, 1,2-dimethoxyethane and dipropylether.

### [Disclosure]

### [Technical Problem]

In order to solve the above problems, the inventors of the present invention intend to provide a lithium-sulfur battery with improved low-temperature performance under a condition of 35°C or less by adding a new ether-based nonsolvent to the SSE-based electrolyte system, which was previously capable of operating normally at high temperature conditions of 45°C or higher.

### [Technical Solution]

According to a first aspect of the invention, the present invention provides an electrolyte solution for a lithium-sulfur battery, wherein the organic solvent in the electrolyte solution for the lithium-sulfur battery comprising a lithium salt and an organic solvent comprises a first solvent, a second solvent, and a third solvent, the first solvent comprises a compound represented by Formula 1 or Formula 2 containing a cyano group (-CN), the second solvent comprises a fluorinated ether-based solvent, and the third solvent comprises an ether-based nonsolvent represented by Formula 3 below.

[Formula 1] R₁-CN

[Formula 2] NC-R₂-CN

(wherein, in Formula 1, R₁ is a C1 to C10 alkyl group, and in Formula 2, R2 is a C1 to C10 alkylene group)

[Formula 3] R₃-O-R₄

(wherein in Formula 3, R₃ and R₄ are the same as or different from each other, and are each independently a methyl group, ethyl group, n-propyl group, iso-propyl group, n-butyl group, iso-butyl group, sec-butyl group or tert-butyl group).

In one embodiment of the present invention, the first solvent may comprise one selected from the group consisting of acetonitrile, succinonitrile, pimelonitrile, glutaronitrile, adiponitrile, and combinations thereof.

In one embodiment of the present invention, the second solvent may comprise one selected from the group consisting of 1,1,2,2-tetrafluoroethyl-2,2,3,3-tetrafluoropropyl ether, 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, 1H,1H,2'H-perfluorodipropyl ether, bis(2,2,2-trifluoroethyl) ether, 1,1,2,2-tetrafluoroethyl 2,2,2-trifluoroethyl ether and combinations thereof.

In one embodiment of the present invention, the third solvent may comprise one selected from the group consisting of diisopropyl ether, ethyl tert-butyl ether, dibutyl ether, diisobutyl ether, dipropyl ether and combinations thereof.

In one embodiment of the present invention, the organic solvent may comprise a first solvent of 15 to 45 volume ratio relative to 100 volume ratio of the organic solvent.

In one embodiment of the present invention, the organic solvent may comprise a third solvent of 10 to 60 volume ratio relative to 100 volume ratio of the organic solvent.

In one embodiment of the present invention, the organic solvent may comprise a third solvent of 25 to 45 volume ratio relative to 100 volume ratio of the organic solvent.

In one embodiment of the present invention, the organic solvent may comprise a third solvent of 25 to 350 volume ratio c relative to 100 volume ratio of the second solvent.

In one embodiment of the present invention, the organic solvent may comprise a third solvent of 85 to 115 volume ratio relative to 100 volume ratio of the second solvent.

According to a second aspect of the invention, the present invention provides a lithium-sulfur battery comprising a positive electrode; a negative electrode; a separator interposed between the positive electrode and the negative electrode; and the electrolyte solution described above.

### [Advantageous Effects]

The lithium-sulfur secondary battery according to the present invention has superior effects in discharging capacity and lifetime characteristics of the battery than the conventional SSE-based electrolyte system even under low temperature conditions of 35°C or less by adding an ether-based nonsolvent, which is a third solvent, to the electrolyte solution to improve the low-temperature performance.

In addition, due to the low density of the ether-based nonsolvent, which is the third solvent, the density of the electrolyte solution is reduced, thereby increasing the energy density of the battery, and having the effect of lowering the solubility of lithium polysulfide.

### [Description of Drawings]

FIG. 1 is a graph showing the evaluation results of the initial charging and discharging performance of Examples 1 to 6 and Comparative Example 1 under a condition of 35°C of the present invention.
FIG. 2 is a graph showing the evaluation results of the initial charging and discharging performance of Examples 2 and 5 and Comparative Example 1 under the condition of 25°C of the present invention.
FIG. 3 is a graph showing the evaluation results of the lifetime characteristics of the batteries of Examples 1 to 6 and Comparative Example 1 under the condition of 35°C of the present invention.
FIG. 4 is a graph showing the evaluation results of the lifetime characteristics of the batteries of Examples 2 and 5 and Comparative Example 1 under the condition of 25°C of the present invention.

### [Best Mode]

The embodiments provided according to the present invention can all be achieved by the following description. It is to be understood that the following description describes preferred embodiments of the present invention, and it should be understood that the present invention is not necessarily limited thereto.

The term "polysulfide" used in the present specification has a concept including both "polysulfide ion (Sₓ²⁻, x = 8, 6, 4, 2)" and "lithium polysulfide (Li₂Sₓ or LiSₓ⁻, x = 8, 6, 4, 2)".

### Electrolyte solution for lithium-sulfur battery

In the electrolyte solution for the lithium-sulfur battery containing a lithium salt and an organic solvent according to the present invention, the organic solvent comprises a first solvent, a second solvent, and a third solvent, the first solvent comprises a compound represented by Formula 1 or Formula 2 containing a cyano group (-CN), the second solvent comprises a fluorinated ether-based solvent, and the third solvent comprises an ether-based nonsolvent represented by Formula 3 below.

[Formula 1] R₁-CN

[Formula 2] NC-R₂-CN

(wherein in Formula 1, R₁ is a C1 to C10 alkyl group, and in Formula 2, R₂ is a C1 to C10 alkylene group)

[Formula 3] R₃-O-R₄

(wherein in Formula 3, R₃ and R₄ are the same as or different from each other, and are each independently a methyl group, ethyl group, n-propyl group, iso-propyl group, n-butyl group, iso-butyl group, sec-butyl group or tert-butyl group).

The first solvent may comprise a compound represented by Formula 1 or Formula 2 containing a cyano group (-CN).

The first solvent may be a compound represented by Formula 1 or Formula 2 above containing a cyano group (-CN), and may preferably comprise one selected from the group consisting of acetonitrile, succinonitrile, pimelonitrile, glutaronitrile, adiponitrile and combinations thereof. Specifically, if acetonitrile containing a cyano group is comprised as the first solvent, it can facilitate the solid-state reaction of sulfur without forming lithium polysulfide, through its high polarity and the property of facilitating the formation of S3-Radical.

The first solvent may comprise one selected from the group consisting of acetonitrile, succinonitrile, pimelonitrile, glutaronitrile, adiponitrile, and combinations thereof, and may preferably be acetonitrile.

The first solvent contained in the organic solvent may be 15 volume ratio or more, 16 volume ratio or more, 17 volume ratio or more, 18 volume ratio or more, 19 volume ratio or more, 20 volume ratio or more, 21 volume ratio or more, 22 volume ratio or more, 23 volume ratio or more, 24 volume ratio or more, 25 volume ratio or more, 26 volume ratio or more, 27 volume ratio or more, or 28 volume ratio or more, and 45 volume ratio or less, 44 volume ratio or less, 43 volume ratio or less, 42 volume ratio or less, 41 volume ratio or less, 40 volume ratio or less, 39 volume ratio or less, 38 volume ratio or less, 37 volume ratio or less, 36 volume ratio or less, 35 volume ratio or less, 34 volume ratio or less, 33 volume ratio or less, or 32 volume ratio or less, relative to 100 volume ratio of the organic solvent. If the volume ratio is less than 15 volume ratio, there may be a problem that since the formation of S3-radical is not easy, the reactivity of sulfur is lowered and it is difficult to secure high performance. On the contrary, if the volume ratio exceeds 45 volume ratio, there may be a problem that acetonitrile may cause a chemical side reaction with the lithium negative electrode, and thus the performance of the battery itself may be deteriorated.

The second solvent may comprise a fluorinated ether-based solvent.

If the second solvent is a fluorinated ether-based solvent, the type thereof is not particularly limited, and may comprise one selected from the group consisting of 1,1,2,2-tetrafluoroethyl-2,2,3,3-tetrafluoropropyl ether (TTE), 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, 1H,1H,2'H-perfluorodipropyl ether, bis(2,2,2-trifluoroethyl) ether, 1,1,2,2-tetrafluoroethyl 2,2,2-trifluoroethyl ether, and combinations thereof, and may preferably be 1,1,2,2-tetrafluoroethyl-2,2,3,3-tetrafluoropropyl ether.

The second solvent contained in the organic solvent may be 10 volume ratio or more, 12 volume ratio or more, 14 volume ratio or more, 16 volume ratio or more, 18 volume ratio or more, 20 volume ratio or more, 22 volume ratio or more, 24 volume ratio or more, 25 volume ratio or more, 26 volume ratio or more, 28 volume ratio or more, 30 volume ratio or more, 32 volume ratio or more, or 34 volume ratio or more, and 85 volume ratio or less, 84 volume ratio or less, 82 volume ratio or less, 80 volume ratio or less, 78 volume ratio or less, 76 volume ratio or less, 74 volume ratio or less, 72 volume ratio or less, 70 volume ratio or less, 68 volume ratio or less, 66 volume ratio or less, 64 volume ratio or less, 62 volume ratio or less, 60 volume ratio or less, 58 volume ratio or less, 56 volume ratio or less, 54 volume ratio or less, 52 volume ratio or less, 50 volume ratio or less, 48 volume ratio or less, 46 volume ratio or less, 45 volume ratio or less, 44 volume ratio or less, 42 volume ratio or less, 40 volume ratio or less, 38 volume ratio or less, or 36 volume ratio or less, relative to 100 volume ratio of the organic solvent. If the volume ratio is less than 10 volume ratio, there may be a problem that since the amount of the second solvent that controls the viscosity is small, the viscosity in the electrolyte solution is increased, and thus the wetting performance for the electrode is greatly reduced, and the ionic conductivity of the entire electrolyte solution is reduced. On the contrary, if the volume ratio exceeds 85 volume ratio, there may be a problem that the ionic conductivity is reduced due to the rapid decrease in the ratio of the first solvent complex represented by acetonitrile.

The third solvent may comprise an ether-based nonsolvent represented by Formula 3 above.

The ether-based nonsolvent may be added to the electrolyte solution of a lithium-sulfur battery to improve the cycle lifetime of the battery including the SSE electrolyte system. Specifically, at the time of occurrence of the problem of shortening of cycle lifetime due to the high viscosity and low lithium mobility of the complex formed by the first solvent represented by acetonitrile and lithium salt represented by LiTFSI in the SSE electrolyte system, there is an effect of improving the viscosity and reactivity by adding the ether-based nonsolvent.

The third solvent may comprise one selected from the group consisting of diisopropyl ether, ethyl tert-butyl ether, dibutyl ether, diisobutyl ether, di-n-propyl ether, and combinations thereof, and preferably, 'if R3 and R4 are different from each other, and each corresponds to an ethyl group or a tert-butyl group', the third solvent may be ethyl tert-butyl ether, and 'if R3 and R4 correspond to a n-butyl group', the third solvent may be dibutyl ether.

The third solvent contained in the organic solvent may be 10 volume ratio or more, 12 volume ratio or more, 14 volume ratio or more, 16 volume ratio or more, 18 volume ratio or more, 20 volume ratio or more, 22 volume ratio or more, 24 volume ratio or more, 25 volume ratio or more, 26 volume ratio or more, 28 volume ratio or more, 30 volume ratio or more, 32 volume ratio or more, or 34 volume ratio or more, and 60 volume ratio or less, 58 volume ratio or less, 56 volume ratio or less, 54 volume ratio or less, 52 volume ratio or less, 50 volume ratio or less, 48 volume ratio or less, 46 volume ratio or less, 45 volume ratio or less, 44 volume ratio or less, 42 volume ratio or less, 40 volume ratio or less, 38 volume ratio or less, or 36 volume ratio or less, relative to 100 volume ratio of the organic solvent. If the volume ratio is less than 10 volume ratio, there may be a problem that the density and viscosity of the electrolyte solution are increased and thus the reactivity of the battery is reduced. On the contrary, if the volume ratio exceeds 60 volume ratio, the behavior of the SSE electrolyte system does not appear anymore, and an overcharging phenomenon may occur due to the shuttle effect of the lithium polysulfide.

The third solvent contained in the organic solvent may be 25 volume ratio or more, 30 volume ratio or more, 35 volume ratio or more, 40 volume ratio or more, 45 volume ratio or more, 50 volume ratio or more, 55 volume ratio or more, 60 volume ratio or more, 65 volume ratio or more, 70 volume ratio or more, 75 volume ratio or more, 80 volume ratio or more, 85 volume ratio or more, 90 volume ratio or more, or 95 volume ratio or more, and 350 volume ratio or less, 335 volume ratio or less, 320 volume ratio or less, 305 volume ratio or less, 290 volume ratio or less, 275 volume ratio or less, 260 volume ratio or less, 245 volume ratio or less, 230 volume ratio or less, 215 volume ratio or less, 200 volume ratio or less, 185 volume ratio or less, 170 volume ratio or less, 155 volume ratio or less, 140 volume ratio or less, 125 volume ratio or less, 120 volume ratio or less, 115 volume ratio or less, 110 volume ratio or less, or 105 volume ratio or less, relative to 100 volume ratio of the second solvent. If the volume ratio is less than 25 volume ratio, the effect of reducing the density of the electrolyte and improving the low temperature performance may be insignificant. On the contrary, if the volume ratio exceeds 350 volume ratio, the behavior of the SSE electrolyte system does not appear anymore, and an overcharging phenomenon may occur due to the shuttle effect of the lithium polysulfide.

The electrolyte solution for the lithium-sulfur battery of the present invention may contain a lithium salt. The lithium salt is a good material to be dissolved in an organic solvent, and may be selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylate, lithium tetraphenyl borate, and lithium imide, and may preferably be LiN(CF₃SO₂)₂ (LITFSI).

The concentration of the lithium salt may be 0.1 to 5.0 M, preferably 0.2 to 3.0 M, more specifically 0.5 to 2.5 M depending on various factors such as the exact composition of the mixture contained in the electrolyte solution, the solubility of the salt, the conductivity of the dissolved salt, the charging and discharging conditions of the battery, the operating temperature, and other factors known in the lithium battery field. If the concentration of the lithium salt is less than 0.1 M, the conductivity of the electrolyte solution may be lowered and thus the performance of the electrolyte solution may be deteriorated. If the concentration of the lithium salt is more than 5.0 M, the viscosity of the electrolyte solution may be increased and thus the mobility of the lithium ion (Li⁺) may be reduced.

The electrolyte solution for the lithium-sulfur battery of the present invention may further include additives commonly used in the art in addition to the composition described above. The electrolyte solution, for example, may comprise one selected from the group consisting of lithium nitrate (LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂), and combinations thereof.

The method for preparing the electrolyte solution for the lithium-sulfur battery according to the present invention is not particularly limited in the present invention, and may be a conventional method known in the art.

### Lithium-sulfur battery

The lithium-sulfur battery according to the present invention comprises a positive electrode; a negative electrode; a separator interposed between the positive electrode and the negative electrode; and an electrolyte solution, wherein the electrolyte solution comprises the electrolyte solution for lithium-sulfur battery according to the present invention.

The positive electrode may comprise a positive electrode current collector and a positive electrode active material layer coated on one surface or both surfaces of the positive electrode current collector.

The positive electrode current collector supports the positive electrode active material and is not particularly limited as long as it has high conductivity without causing chemical change in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material layer may comprise a positive electrode active material, a binder, and an electrically conductive material.

The positive electrode active material may comprise at least one selected from the group consisting of elemental sulfur (S₈), organic sulfur compound, Li₂Sₙ(n≥1) and carbon-sulfur polymer ((C₂Sₓ)ₙ: x=2.5 ~ 50, n≥2).

Sulfur contained in positive electrode active material is used in combination with an electrically conductive material such as a carbon material because it does not have electrical conductivity alone. Accordingly, the sulfur is contained in the form of a sulfur-carbon composite, and preferably, the positive electrode active material may be a sulfur-carbon composite.

The carbon in the sulfur-carbon composite is a porous carbon material and provides a framework capable of uniformly and stably immobilizing sulfur, and supplements the low electrical conductivity of sulfur to enable the electrochemical reaction to proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. If the average diameter of the pores is less than the above range, the pore size is only at the molecular level and impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); graphite such as natural graphite, artificial graphite, and expanded graphite, and activated carbon, and preferably carbon nanotube (CNT).

The method for preparing the sulfur-carbon composite is not particularly limited in the present invention, and a method commonly used in the art may be used.

The positive electrode may further comprise at least one additive selected from a transition metal element, a group IIIA element, a group IVA element, a sulfur compound of these elements, and an alloy of these elements and sulfur, in addition to the above-described positive electrode active material.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Ti and the like, and the group IVA element may comprise Ge, Sn, Pb, and the like.

The electrically conductive material is a material that acts as a path, through which electrons are transferred from the current collector to the positive electrode active material, by electrically connecting the electrolyte and the positive electrode active material, and may be used without limitation as long as it has electrical conductivity.

For example, as the electrically conductive material, graphite such as natural graphite or artificial graphite; carbon blacks such as Super P, Denka black, acetylene black, Ketjen black, channel black, furnace black, lamp black, and thermal black; carbon derivatives such as carbon nanotubes and fullerene; electrically conductive fibers such as carbon fiber and metal fiber; carbon fluoride; metal powders such as aluminum and nickel powder or electrically conductive polymers such as polyaniline, polythiophene, polyacetylene, and polypyrrole may be used alone or in combination.

The binder maintains the positive electrode active material in the positive electrode current collector and organically connects the positive electrode active materials to further increase the binding force therebetween, and any binder known in the art can be used as the binder.

For example, the binder may be fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxypropylcellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The method of manufacturing the positive electrode is not particularly limited in the present invention, and a method commonly used in the art may be used. For example, the positive electrode may be prepared by preparing a slurry composition for the positive electrode and then applying it to at least one surface of the positive electrode current collector.

The slurry composition for the positive electrode comprises the positive electrode active material, the electrically conductive material, and the binder as described above, and may further comprise a solvent other than the above solvent.

As the solvent, one capable of uniformly dispersing a positive electrode active material, an electrically conductive material, and a binder is used. Such a solvent is an aqueous solvent, and water is most preferred, and in this case, water may be distilled water or de-ionized water. However, it is not necessarily limited thereto, and if necessary, a lower alcohol that can be easily mixed with water may be used. Examples of the lower alcohol include methanol, ethanol, propanol, isopropanol, and butanol, and preferably, they may be used in combination with water.

The loading amount of sulfur in the positive electrode may be 1 to 10 mAh/cm², preferably 3 to 6 mAh/cm².

The negative electrode may comprise a negative electrode current collector and a negative electrode active material layer coated on one surface or both surfaces of the negative electrode current collector. Alternatively, the negative electrode may be a lithium metal plate.

The negative electrode current collector is for supporting the negative electrode active material layer, and is not particularly limited as long as it has high conductivity without causing chemical changes in the battery and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition to those, sintered carbon, a non-conductive polymer surface-treated with an electrically conductive material, or an electrically conductive polymer may be used.

In addition, the shape of the negative electrode current collector can be various forms such as a film having or not having fine irregularities on a surface, sheet, foil, net, porous body, foam, nonwoven fabric and the like.

The negative electrode active material layer may include an electrically conductive material, a binder, etc. in addition to the negative electrode active material. At this time, the electrically conductive material and the binder are as described above.

The negative electrode active material may comprise a material capable of reversibly intercalating or deintercalating lithium (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of forming the negative electrode active material is not particularly limited, and a method of forming a layer or film commonly used in the art may be used. For example, methods such as compression, coating, and deposition may be used. In addition, a case, in which a thin film of metallic lithium is formed on a metal plate by initial charging after assembling a battery without a lithium thin film on the current collector, is also comprised in the negative electrode of the present invention.

The electrolyte solution is for causing an electrochemical oxidation or reduction reaction in the positive electrode and the negative electrode through it, and is as described above.

The injection of the electrolyte solution may be performed at an appropriate step in the manufacturing process of a lithium-sulfur battery depending on the manufacturing process and required physical properties of the final product. That is, it can be applied before assembling the lithium-sulfur battery or in the final stage of assembling.

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator can be used without any particular limitation as long as it is normally used as a separator in a lithium-sulfur battery. The separator may be an independent member such as a film or may be a coating layer added to the positive electrode and/or the negative electrode.

The separator may be made of a porous substrate. Any of the porous substrates can be used as long as it is a porous substrate commonly used in a lithium-sulfur battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in a lithium-sulfur battery. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenylene oxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, but may be 0.1 to 50 µm and 10 to 95%, respectively.

In the case of the lithium-sulfur battery according to the present invention, it is possible to perform laminating or stacking and folding processes of the separator and the electrode, in addition to the winding process which is a general process.

The shape of the lithium-sulfur battery is not particularly limited, and may have various shapes such as a cylindrical type, a stacked type, and a coin type.

Hereinafter, preferred examples are presented to help the understanding of the present invention, but the following examples are provided only to make the present invention easier to understand, and the present invention is not limited thereto.

### Example: Manufacture of lithium-sulfur battery

### Preparation of electrolyte solution for lithium-sulfur battery: Preparation Examples 1 to 7

### [Preparation Example 1]

Lithium bis (trifluoromethyl sulfonyl) imide (LiTFSI) at a concentration of 2.3 M was dissolved in an organic solvent to prepare an electrolyte solution for a lithium-sulfur battery.

A solvent obtained by mixing acetonitrile (ACN), which is a first solvent, 1,1,2,2-tetrafluoroethyl-2,2,3,3-tetrafluoropropyl ether (TTE), which is a second solvent, and ethyl tert-butyl ether (EtBE), which is a third solvent at a volume ratio of 30:52.5:17.5 was used as the organic solvent

### [Preparation Example 2]

An electrolyte solution for a lithium-sulfur battery was prepared in the same manner as in Preparation Example 1, except that when preparing the organic solvent, the first solvent, the second solvent, and the third solvent are mixed at a volume ratio of 30:35:35.

### [Preparation Example 3]

An electrolyte solution for a lithium-sulfur battery was prepared in the same manner as in Preparation Example 1, except that when preparing the organic solvent, the first solvent, the second solvent, and the third solvent are mixed at a volume ratio of 30:17.5:52.5.

### [Preparation Example 4]

An electrolyte solution for a lithium-sulfur battery was prepared in the same manner as in Preparation Example 1, except that when preparing the organic solvent, diisopropyl ether (DiPE) was used in place of ethyl tert-butyl ether (EtBE) as the third solvent.

### [Preparation Example 5]

An electrolyte solution for a lithium-sulfur battery was prepared in the same manner as in Preparation Example 2, except that when preparing the organic solvent, diisopropyl ether (DiPE) was used in place of ethyl tert-butyl ether (EtBE) as the third solvent.

### [Preparation Example 6]

An electrolyte solution for a lithium-sulfur battery was prepared in the same manner as in Preparation Example 3, except that when preparing the organic solvent, diisopropyl ether (DiPE) was used in place of ethyl tert-butyl ether (EtBE) as the third solvent.

### [Preparation Example 7]

An electrolyte solution for a lithium-sulfur battery was prepared in the same manner as in Preparation Example 1, except that without using the third solvent, acetonitrile (ACN) as the first solvent and 1,1,2,2-tetrafluoroethyl-2,2,3,3-tetrafluoropropyl ether (TTE) as the second solvent were mixed at a volume ratio of 30:70 to obtain an organic solvent.

**Table 1:**

| Electrolyte solution | First solvent | Second solvent | Third solvent | Mixing volume ratio | Volume ratio of third solvent relative to 100 volume ratio of second solvent |
|---|---|---|---|---|---|
| Preparation Example 1 | ACN | TTE | EtBE | 30 : 52.5 : 17.5 | 33.4 volume ratio |
| Preparation Example 2 | ACN | TTE | EtBE | 30 : 35 : 35 | 100 volume ratio |
| Preparation Example 3 | ACN | TTE | EtBE | 30 : 17.5 : 52.5 | 300 volume ratio |
| Preparation Example 4 | ACN | TTE | DiPE | 30 : 52.5 : 17.5 | 33.4 volume ratio |
| Preparation Example 5 | ACN | TTE | DiPE | 30 : 35 : 35 | 100 volume ratio |
| Preparation Example 6 | ACN | TTE | DiPE | 30 : 17.5 : 52.5 | 300 volume ratio |
| Preparation Example 7 | ACN | TTE | - | 30:70 | - |

| | | | | | |
|---|---|---|---|---|---|
| * The mixing volume ratio means the volume ratio of 'first solvent : second solvent : third solvent.' * ACN: acetonitrile / TTE: 1,1,2,2-tetrafluoroethyl-2,2,3,3-tetrafluoropropyl ether / EtBE: ethyl tert-butyl ether / DiPE: diisopropyl ether. | | | | | |

### Manufacture of lithium-sulfur battery: Examples 1 to 6 and Comparative Example 1

### [Example 1]

Water was used as the solvent, and a sulfur-carbon composite, an electrically conductive material, and a binder were mixed at a ratio of 90:10:10 to prepare a slurry for a positive electrode active material. At this time, the sulfur-carbon composite was prepared by mixing sulfur and carbon nanotubes (CNT) at a weight ratio of 7:3, followed by melt-diffusion at 155°C. In addition, Denka black was used as the electrically conductive material, and a binder in the form of a mixture of SBR and CMC was used as the binder.

The slurry for the positive electrode active material was applied to one surface of an aluminum current collector, and then dried to prepare a positive electrode with a loading amount of 5 mAh/cm².

In addition, a lithium metal having a thickness of 50 µm was used as the negative electrode.

After positioning the prepared positive electrode and the negative electrode to face each other, a polyethylene separator having a thickness of 20 µm and a porosity of 45% was interposed between the positive electrode and the negative electrode. Thereafter, the electrolyte solution for the lithium-sulfur battery of Preparation Example 1 was injected into the case to manufacture a lithium-sulfur battery.

### [Examples 2 to 6]

Lithium-sulfur batteries were prepared in the same manner as in Example 1, except that the electrolyte solutions of Preparation Examples 2 to 6 above were used as an electrolyte solution for a lithium-sulfur battery.

### [Comparative Example 1]

A lithium-sulfur battery was prepared in the same manner as in Example 1, except that the electrolyte solution of Preparation Example 7 above was used as an electrolyte solution for a lithium-sulfur battery.

### Experimental Example 1: Evaluation of initial charging and discharging performance

Initial charging and discharging performances were evaluated for the lithium-sulfur batteries manufactured by Examples 1 to 6 and Comparative Example 1 above.

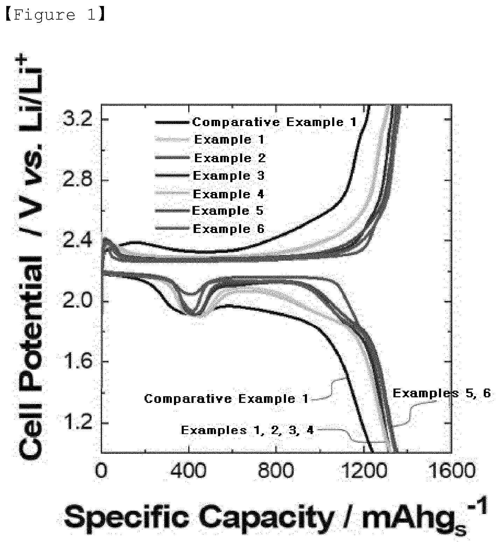

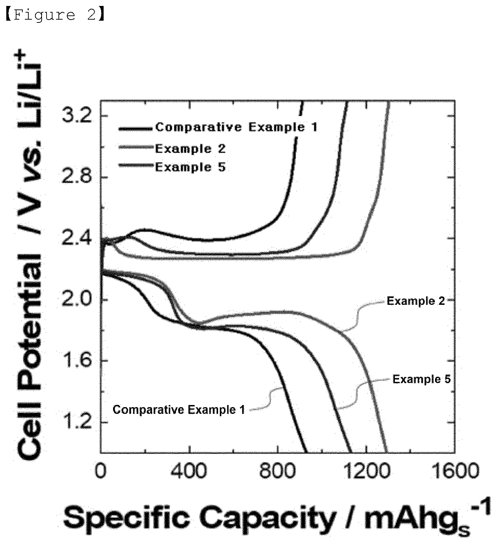

Specifically, when the operating temperature of the battery was 35°C and 25°C, the initial discharging capacity and the nominal voltage in the first cycle were measured by performing 0.1C charging/0.1C discharging for 3 cycles in a voltage range of 1.0 to 3.3V, and the results are shown in Table 2 below. In addition, the evaluation result at an operating temperature of 35°C is shown in FIG. 1 and the evaluation result at 25°C is shown in FIG. 2.

**Table 2:**

| | Operating temperature 35°C | | Operating temperature 25°C | |
|---|---|---|---|---|
| | 0.1C initial capacity (mAh/g_{sulfur}) | 0.1C initial discharging nominal voltage (V) | 0.1C initial capacity (mAh/g_{sulfur}) | 0.1C initial discharging nominal voltage (V) |
| Example 1 | 1319 | 2.045 | - | - |
| Example 2 | 1321 | 2.067 | 1292 | 1.892 |
| Example 3 | 1318 | 2.031 | - | - |
| Example 4 | 1323 | 2.037 | - | - |
| Example 5 | 1353 | 2.014 | 1134 | 1.824 |
| Example 6 | 1346 | 2.052 | - | - |
| Comparative Example 1 | 1243 | 1.891 | 932 | 1.798 |

According to Table 2 and FIGs. 1 and 2, it was confirmed that Examples 1 to 6, in which 'a part of TTE, which is the second solvent, was replaced with a third solvent, which is an ether-based nonsolvent' have an excellent initial discharging capacity of 1300 mAh/g_{sulfur} or more and a high nominal voltage of 2.014V or more even at 35 °C, which is a low temperature relative to the operating temperature of the conventional sparingly solving electrolyte (SSE) electrolyte system, and through this, it was found that the energy density of the battery was also increased.

In particular, in the case of Examples 2 and 5, which include an electrolyte solution obtained not only by adding the first solvent but also by mixing the second solvent and the third solvent at a volume ratio of 1:1, it was confirmed that the initial discharging capacity and nominal voltage were superior to those of other Examples in which only the mixing volume ratio was different for the same type of solvent.

In addition, even under the operating condition of 25°C , which is lower than 35°C, Examples 2 and 5 'including a third solvent, which is an ether-based nonsolvent', showed superior effects compared to Comparative Example 1 through an initial discharging capacity of 1130 mAh/g_{sulfur} or more and an increased nominal voltage.

### Experimental Example 2: Evaluation of lifetime characteristics of battery

For the lithium-sulfur batteries prepared in Examples 1 to 6 and Comparative Example 1, lifetime characteristics of the batteries were evaluated through repetition of a charging/discharging cycle.

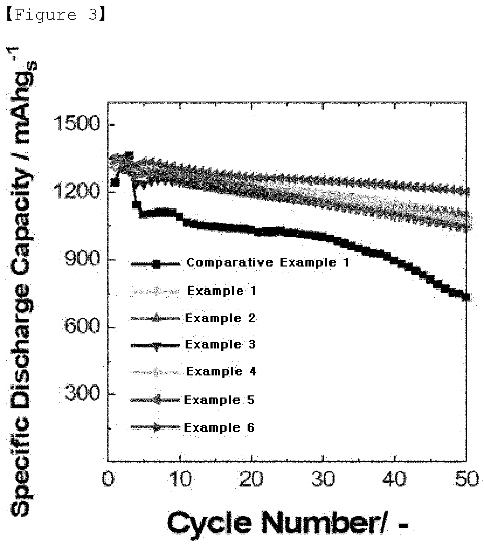

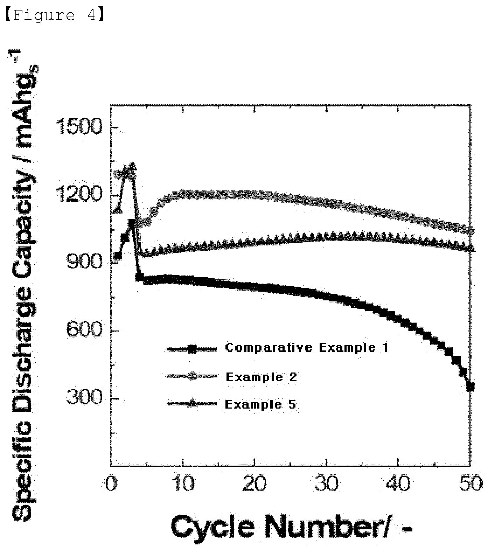

Specifically, after 3 cycles of 0.1C charging/0.1C discharging in a voltage range of 1.0 to 3.3V, the lifetime characteristics of the batteries were evaluated while repeating 0.1C charging/0.3C discharging. The results obtained by performing the evaluation of the lifetime characteristics of the batteries at the operating temperature of the battery of 35°C are shown in FIG. 3, and the results obtained by proceeding at the operating temperature of 25°C are shown in FIG. 4. In addition, when the operating temperature of the battery was 35°C and 25°C, the discharging capacity after the 50^{th} cycle was measured, and the results are shown in Table 3 below.

**Table 3:**

| | Operating temperature 35 °C | Operating temperature 25°C |
|---|---|---|
| | Discharging capacity after 50^{th} cycle (mAh/g_{sulfur}) | Discharging capacity after 50^{th} cycle (mAh/g_{sulfur}) |
| Example 1 | 1102 | - |
| Example 2 | 1098 | 1040 |
| Example 3 | 1042 | - |
| Example 4 | 1070 | - |
| Example 5 | 1201 | 963 |
| Example 6 | 1039 | - |
| Comparative Example 1 | 733 | 350 |

First, referring to FIG. 3 and Table 3, it was confirmed that Examples 1 to 6, in which 'a part of TTE, which is the second solvent, was replaced with a third solvent, which is an ether-based nonsolvent, have excellent lifetime characteristics of batteries under the condition of 35°C, which is a low temperature relative to the operating temperature of the conventional SSE electrolyte system, compared to Comparative Example 1 which does not include an ether-based nonsolvent at all.

In addition, referring to FIG. 4 and Table 3, it was confirmed that Examples 2 and 5 'comprising a third solvent that is an ether-based non-solvent' have excellent lifetime characteristics of batteries even at the operating temperature of 25°C, compared to Comparative Example 1 which does not include an ether-based nonsolvent at all. In particular, it was confirmed that in the case of Comparative Example 1, the discharging capacity of the battery after 30 cycles drops sharply under the low-temperature operating condition of 25°C.

## Claims

1. An electrolyte solution for a lithium-sulfur battery comprising a lithium salt and an organic solvent, wherein the organic solvent comprises a first solvent, a second solvent, and a third solvent, the first solvent comprises a compound represented by Formula 1 or Formula 2 containing a cyano group (-CN); , the second solvent comprises a fluorinated ether-based solvent, and the third solvent comprises an ether-based non-solvent represented by Formula 3 below:
[Formula 1] R₁-CN
[Formula 2] NC-R₂-CN
wherein in Formula 1, R₁ is a C1 to C10 alkyl group, and in Formula 2, R₂ is a C1 to C10 alkylene group,
[Formula 3] R₃-O-R₄
wherein in Formula 3, R₃ and R₄ are the same as or different from each other, and are each independently a methyl group, ethyl group, n-propyl group, iso-propyl group, n-butyl group, iso-butyl group, sec-butyl group or tert-butyl group.

2. The electrolyte solution for the lithium-sulfur battery according to claim 1, wherein the first solvent is selected from the group consisting of acetonitrile, succinonitrile, pimelonitrile, glutaronitrile, adiponitrile, and combinations thereof.

3. The electrolyte solution for the lithium-sulfur battery according to claim 1, wherein the second solvent is selected from the group consisting of 1,1,2,2-tetrafluoroethyl-2,2,3,3-tetrafluoropropyl ether, 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, 1H,1H,2'H-perfluorodipropyl ether, bis(2,2,2-trifluoroethyl) ether, 1,1,2,2-tetrafluoroethyl 2,2,2-trifluoroethyl ether, and combinations thereof.

4. The electrolyte solution for the lithium-sulfur battery according to claim 1, wherein the third solvent is selected from the group consisting of diisopropyl ether, ethyl tert-butyl ether, dibutyl ether, diisobutyl ether, dipropyl ether, and combinations thereof.

5. The electrolyte solution for the lithium-sulfur battery according to claim 1, wherein the organic solvent comprises the first solvent of 15 to 45 volume ratio relative to 100 volume ratio of the organic solvent.

6. The electrolyte solution for the lithium-sulfur battery according to claim 1, wherein the organic solvent comprises the third solvent of 10 to 60 volume ratio relative to 100 volume ratio of the organic solvent.

7. The electrolyte solution for the lithium-sulfur battery according to claim 1, wherein the organic solvent comprises the third solvent of 25 to 45 volume ratio relative to 100 volume ratio of the organic solvent.

8. The electrolyte solution for the lithium-sulfur battery according to claim 1, wherein the organic solvent comprises the third solvent of 25 to 350 volume ratio relative to 100 volume ratio of the second solvent.

9. The electrolyte solution for the lithium-sulfur battery according to claim 1, wherein the organic solvent comprises the third solvent of 85 to 115 volume ratio relative to 100 volume ratio of the second solvent.

10. A lithium-sulfur battery comprising a positive electrode; a negative electrode; a separator interposed between the positive electrode and the negative electrode; and the electrolyte solution of any one of claims 1 to 9.

## Patentansprüche

1. Elektrolytlösung für eine Lithium-Schwefel-Batterie, umfassend ein Lithiumsalz und ein organisches Lösungsmittel, wobei das organische Lösungsmittel ein erstes Lösungsmittel, ein zweites Lösungsmittel und ein drittes Lösungsmittel umfasst, das erste Lösungsmittel eine durch Formel 1 oder Formel 2 dargestellte Verbindung umfasst, die eine Cyanogruppe (-CN) enthält; das zweite Lösungsmittel ein fluoriertes Lösungsmittel auf Etherbasis umfasst und das dritte Lösungsmittel ein Nichtlösungsmittel auf Etherbasis umfasst, das durch Formel 3 unten dargestellt ist:
[Formel 1] R₁-CN
[Formel 2] NC-R₂-CN
wobei in Formel 1 R₁ eine C1- bis C10-Alkylgruppe ist und in Formel 2 R₂ eine C1- bis C10-Alkylengruppe ist,
[Formel 3] R₃-O-R₄
wobei in Formel 3 R₃ und R₄ gleich oder voneinander verschieden sind und jeweils unabhängig eine Methylgruppe, Ethylgruppe, n-Propylgruppe, Isopropylgruppe, n-Butylgruppe, Isobutylgruppe, sec-Butylgruppe oder tert-Butylgruppe sind.

2. Elektrolytlösung für die Lithium-Schwefel-Batterie nach Anspruch 1, wobei das erste Lösungsmittel ausgewählt ist aus der Gruppe bestehend aus Acetonitril, Succinonitril, Pimelonitril, Glutaronitril, Adiponitril und Kombinationen davon.

3. Elektrolytlösung für die Lithium-Schwefel-Batterie nach Anspruch 1, wobei das zweite Lösungsmittel ausgewählt ist aus der Gruppe bestehend aus 1,1,2,2-Tetrafluorethyl-2,2,3,3-tetrafluorpropylether, 1H,1H,2'H,3H-Decafluordipropylether, Difluormethyl-2,2,2-trifluorethylether, 1,2,2,2-Tetrafluorethyltrifluormethylether, 1,1,2,3,3,3-Hexafluorpropyldifluormethylether, 1H,1H,2'H,3H-Decafluordipropylether, Pentafluorethyl-2,2,2-trifluorethylether, 1H,1H,2'H-Perfluordipropylether, Bis(2,2,2-trifluorethyl)ether, 1,1,2,2-Tetrafluorethyl-2,2,2-trifluorethylether und Kombinationen davon.

4. Elektrolytlösung für die Lithium-Schwefel-Batterie nach Anspruch 1, wobei das dritte Lösungsmittel ausgewählt ist aus der Gruppe bestehend aus Diisopropylether, Ethyl-tert-butylether, Dibutylether, Diisobutylether, Dipropylether und Kombinationen davon.

5. Elektrolytlösung für die Lithium-Schwefel-Batterie nach Anspruch 1, wobei das organische Lösungsmittel das erste Lösungsmittel in einem Volumenverhältnis von 15 bis 45, bezogen auf 100 Volumenverhältnis des organischen Lösungsmittels, umfasst.

6. Elektrolytlösung für die Lithium-Schwefel-Batterie nach Anspruch 1, wobei das organische Lösungsmittel das dritte Lösungsmittel in einem Volumenverhältnis von 10 bis 60, bezogen auf 100 Volumenverhältnis des organischen Lösungsmittels, umfasst.

7. Elektrolytlösung für die Lithium-Schwefel-Batterie nach Anspruch 1, wobei das organische Lösungsmittel das dritte Lösungsmittel in einem Volumenverhältnis von 25 bis 45, bezogen auf 100 Volumenverhältnis des organischen Lösungsmittels, umfasst.

8. Elektrolytlösung für die Lithium-Schwefel-Batterie nach Anspruch 1, wobei das organische Lösungsmittel das dritte Lösungsmittel in einem Volumenverhältnis von 25 bis 350, bezogen auf 100 Volumenverhältnis des zweiten Lösungsmittels, umfasst.

9. Elektrolytlösung für die Lithium-Schwefel-Batterie nach Anspruch 1, wobei das organische Lösungsmittel das dritte Lösungsmittel in einem Volumenverhältnis von 85 bis 115, bezogen auf 100 Volumenverhältnis des zweiten Lösungsmittels, umfasst.

10. Lithium-Schwefel-Batterie, umfassend eine positive Elektrode; eine negative Elektrode; einen Separator, der zwischen der positiven Elektrode und der negativen Elektrode angeordnet ist; und die Elektrolytlösung nach einem der Ansprüche 1 bis 9.

## Revendications

1. Solution d'électrolyte pour une batterie au lithium-soufre comprenant un sel de lithium et un solvant organique, dans laquelle le solvant organique comprend un premier solvant, un deuxième solvant et un troisième solvant, le premier solvant comprend un composé représenté par la Formule 1 ou la Formule 2 contenant un groupe cyano (-CN) ; le deuxième solvant comprend un solvant à base d'éther fluoré et le troisième solvant comprend un solvant non à base d'éther représenté par la Formule 3 ci-dessous :
[Formule 1] R₁-CN
[Formule 2] NC-R₂-CN
dans laquelle dans la Formule 1, R₁ est un groupe alkyle en C1 à C10 et, dans la Formule 2, R₂ est un groupe alkylène en C1 à C10,
[Formule 3] R₃-O-R₄
dans laquelle dans la Formule 3, R₃ et R₄ sont identiques ou différents l'un de l'autre, et sont chacun indépendamment un groupe méthyle, un groupe éthyle, un groupe n-propyle, un groupe isopropyle, un groupe n-butyle, un groupe isobutyle, un groupe sec-butyle ou un groupe tert-butyle.

2. Solution d'électrolyte pour la batterie au lithium-soufre selon la revendication 1, dans laquelle le premier solvant est sélectionné dans le groupe constitué d'acétonitrile, succinonitrile, pimélonitrile, glutaronitrile, adiponitrile, et des combinaisons de ces derniers.

3. Solution d'électrolyte pour la batterie au lithium-soufre selon la revendication 1, dans laquelle le deuxième solvant est sélectionné dans le groupe constitué d'éther de 1,1,2,2-tétrafluoroéthyl-2,2,3,3-tétrafluoropropyle, éther de 1H,1H,2'H,3H-décafluorodipropyle, éther de difluorométhyle 2,2,2-trifluoroéthyle, éther de 1,2,2,2-tétrafluoroéthyle trifluorométhyle, éther de 1,1,2,3,3,3-hexafluoropropyle difluorométhyle, éther de 1H,1H,2'H,3H-décafluorodipropyle, éther de 2,2,2-trifluoroéthyle pentafluoroéthyle, éther de 1H, 1H,2'H-perfluorodipropyle, éther de bis(2,2,2-trifluoroéthyl), éther de 1,1,2,2-tétrafluoroéthyle 2,2,2-trifluoroéthyle, et des combinaisons de ces derniers.

4. Solution d'électrolyte pour la batterie au lithium-soufre selon la revendication 1, dans laquelle le troisième solvant est sélectionné dans le groupe constitué d'éther de diisopropyle, éther de tert-butyle d'éthyle, éther de dibutyle, éther de diisobutyle, éther de dipropyle, et des combinaisons de ces derniers.

5. Solution d'électrolyte pour la batterie au lithium-soufre selon la revendication 1, dans laquelle le solvant organique comprend le premier solvant dans un rapport en volume de 15 à 45 pour un rapport en volume de 100 du solvant organique.

6. Solution d'électrolyte pour la batterie au lithium-soufre selon la revendication 1, dans laquelle le solvant organique comprend le troisième solvant dans un rapport en volume de 10 à 60 pour un rapport en volume de 100 du solvant organique.

7. Solution d'électrolyte pour la batterie au lithium-soufre selon la revendication 1, dans laquelle le solvant organique comprend le troisième solvant dans un rapport en volume de 25 à 45 pour un rapport en volume de 100 du solvant organique.

8. Solution d'électrolyte pour la batterie au lithium-soufre selon la revendication 1, dans laquelle le solvant organique comprend le troisième solvant dans un rapport en volume de 25 à 350 pour un rapport en volume de 100 du deuxième solvant.

9. Solution d'électrolyte pour la batterie au lithium-soufre selon la revendication 1, dans laquelle le solvant organique comprend le troisième solvant dans un rapport en volume de 85 à 115 pour un rapport en volume de 100 du deuxième solvant.

10. Batterie au lithium-soufre comprenant une électrode positive ; une électrode négative ; un séparateur interposé entre l'électrode positive et l'électrode négative ; et la solution d'électrolyte selon l'une quelconque des revendications 1 à 9.
